# EUROPEAN PATENT SPECIFICATION

(11) **EP 3 462 887 B1**
(45) Date of publication and mention of the grant of the patent: **14.04.2021**
(21) Application number: 17807087.6
(22) Date of filing: 30.05.2017
(51) Int. Cl.: A21C 3/02

(54) **DEVICE AND METHOD FOR PROCESSING DOUGH**
VORRICHTUNG UND VERFAHREN ZUR VERARBEITUNG VON TEIG
DISPOSITIF ET PROCÉDÉ DE TRAITEMENT D'UNE PÂTE

(30) Priority: 30.05.2016 NO 20160921
(43) Date of publication of application: 10.04.2019
(73) Proprietor: Dynatec Engineering AS, 1814 Askim (NO)
(72) Inventor: FILTVEDT, Josef, Tomter 1825 (NO); FILTVEDT, Werner O., 1825 Tomter (NO)
(74) Representative: Protector IP AS
(86) International application number: PCT/NO2017/050137
(87) International publication number: WO 2017/209624

(56) References cited:
- EP-A1- 0 211 669
- EP-A2- 0 740 902
- DE-A1- 3 238 388
- GB-A- 208 197
- GB-A- 208 197
- US-A- 2 674 209
- US-A- 2 674 209
- US-A- 5 533 439
- US-A1- 2002 187 236
- US-A1- 2003 228 388

## Description

### Field of the invention

The present invention relates to processing of dough. More particularly the invention relates to a device and method for rolling out dough in a way such that the dough achieves a curved structure with better or more isotropic mechanical properties that a straight structure.

### Technical background of the invention and prior art

When a substance, such as a flour-containing dough is exposed to sufficiently large forces, the shape of the dough will be permanently changed.

This process is known and is used in various forms in all production of baked goods. When mechanically processing dough containing gluten, there will be formed a bonding grid or structure that gives the dough an increased strength when further processed. If the intensity of the processing is too high, the bonding structure will be permanently damaged and the structure in the dough will be weaker.

This effect can, to some extent be reduced by use of additives such as potassium bromate that can help overstretched gluten chains to loosen without breaking when the dough is resting after the mechanical processing. The strength of the dough and in the product after being baked, will be significantly greater along the gluten bonds than across the gluten bonds. If the dough is processed or stretched in one direction, there will be more gluten chains in this direction than before the processing. It is therefore crucial that the processing direction is the same as the direction where the strength is needed, both in the processed and in the baked product.

When the dough is processed to achieve a definitive shape, one wishes to align the gluten grid with the geometry of the product. If the geometry is spherical, it is a desire to have internally spherical gluten grid. If the product geometry of the dough is a sheet to be further processed, it is desirable that the gluten bonds are stretched both lengthwise and crosswise of the sheet of dough.

Processing of the dough through rolling out is a common technic that are known form a large number of designs. Today, the most common industrial method for producing a thin sheet of dough is to lay out a thick sheet of dough and then reduce the thickness of this sheet of dough through several subsequent pair of rolling. The most common method is to process the sheet of dough in the longitudinal direction, which means that the speed of the sheet of dough must increase after rolling since the cross-section area of the sheet of dough decreases with the thickness and the volume is constant. It is also possible to combine this with rolling out latitudinal to prevent the structure from being formed only in the direction of movement of the dough. These designs are often either a pair of rollers that directly reduces the thickness of the sheet of dough, cross rolling in a straight direction where the roller is moved crosswise of the moving direction of the dough or chain rolling where a number of roller are moved crosswise of the moving direction of the dough. There are also other methods where rollers or sheets squeezes, claps or vibrates the dough to reduce the thickness and or the width, more information about the method can be found for instance in US5804225.

Publication US20030228388 shows a device for processing a dough.
This comprises a plurality of rollers that are adapted to knock and roll a fermented strip of dough to remove the fermented gas in the dough and to give this a good elasticity and even structure when rolled out. The publication discloses rollers that are arranged in a belt and that are sequentially moved upstream and downstream around a hub.

Publication DE3238388 shows a process for stretching the width of a raw shred of dough. This is transported along an endless belt along a substantially horizontal path. A helical roller is arranged on the upper side of the dough, this is adapted to be rotated with a higher speed that the speed of the endless belt and the strip of dough.

Other publications that shows the state of the art are EP0740902 and EP0211669, US2674209, GB208197 and US2002/187236.

The known techniques shows stretching, pressing or rolling the dough in the lengthwise or crosswise direction of the dough. These methods result in creation of a structure in the longitudinal direction or in the transverse direction of the dough. Alternatively, the dough is processed in the transverse direction while moving in the longitudinal direction, thus getting a straight structure, but inclined in relation to the moving direction of the sheet of dough. A straight structure in the grid, whichever direction, will act as a crack initiator in the finished baked product and reduce the mechanical strength.

For products where the mechanical strength is critical such as "lefse" or tortilla where the product is to be rolled and that contains a stuffing, the reduced mechanical strength will reduce the functionality and durability of the product. Having the opportunity to process the product without producing the crack initiators will therefore be a significant improvement over today's methods.

### Summary of the invention

The invention relates to processing a sheet of dough in such a way that there is achieved a curved structure or in other suitable ways a non-straight structure in the sheet of dough. The aim of avoiding the straight structures is to improve the strength in the sheet of dough when the baked product is folded or rolled.

Today's straight structures are weak along these structures and when the product is folded or rolled the likelihood of cracking of the product is higher. The consumers do not have the possibility to know which direction these structures are directed within the sheet of dough, and the orientation of folds or roller edges will necessarily be random in relation to the structural direction in the dough. The strength of the product will therefore, for the consumer appear incidental dependent on which direction the product are rolled relative the direction of the structure in the product. An obtained structure that is curved instead of straight, will result in that all direction of the rolling or folding will not follow along the structure that is curved. The product will therefore, regardless of orientation of the folding edge or bend, not have a lined folding edge and structure, and the product appears for the consumer to be stronger and more even in strength and quality. This function may be achieved in many ways, but common for all of them, will be that the processing angle in relation to the direction of movement of the dough varies along the width of the sheet of dough to avoid a straight structure in the dough. One way of achieving this function is to process the dough with a chain of rollers where the path of the chain of rollers are curved relative the direction of movement of the sheet of dough. How much the thickness of the dough is to be reduced compared the speed of the sheet of dough will determine which solution that is best suited for the current use or type of dough.

The invention relates to a device for processing a sheet of dough to reduce the thickness of this, where the device comprises a plurality of rollers arranged in series in a rollers assembly where each roller is configured to move in a curved path when the roller is in contact with the sheet of dough in order to create curved structures created within the sheet of dough after processing the sheet of dough in the device, said each roller in the roller assembly is configured to initially to be in contact with the sheet of dough substantially along a center axis that extends in the longitudinal direction of the sheet of dough, the device comprise two roller assemblies, said roller assemblies are arranged symmetrical about the center axis of the sheet of dough, said roller assemblies are acting oppositely.

The invention further relates to a device for processing a sheet of dough to reduce the thickness of this, where the device comprises a plurality of rollers arranged in series in a roller assembly. Each roller is arranged in a curved path that extends from the middle of the sheet of dough towards the outer edge of the sheet of dough in the transversal direction when the rollers are in contact with the sheet of dough. The rolling out of the sheet of dough thus follows a curved path.

The aim of this is to shape a dough or more specifically to reduce the thickness and increase the width of a sheet of dough where the structure in the processed sheet of dough is curved to maintain the bonding of the structure.
This further results in a stretch of the sheet of dough in addition to the movement of the rollers and in an even rolling out of the dough to prevent that the dough is drawn to one side.

Preferably, the sheet of dough is configured to move linearly along an axis that is parallel with the roller axis to the roller that initially contacts the sheet of dough when the sheet of dough is present in the device.

The roller that is in the first position where it initially is in contact with the sheet of dough is thus configured to roll transversely of the direction of movement of the sheet of dough.

Preferably, each of the roller is configured to be in contact with the sheet of dough at different times, when the sheet of dough is present in the device.

Each of the roller will thus be in contact with the sheet of dough in a limited amount of time so that the sheet of dough may move transversely of the rolling direction of the first roller that is initially in contact with the sheet of dough.

Preferably, each of the rollers have a conical shape.

This gives an improved rolling geometry because of the curved pat. The inner portion of the roller will be following a shorter path than the outer portion of the roller.

Preferably, the rollers are arranged in series along at least one rotatable chain.

Preferably, the rollers are arranged in series along at least one rotatable track.

Preferably, said roller is configured to roll in a longitudinally direction of the direction of movement compared to the sheet of dough when the roller is in contact with the sheet of dough in the end position.

Preferably, the rollers are movable arranged in a hub. This provides an easier assembly than using chains.

Preferably, the rollers are evenly distributed along the periphery of the hub. This provides an even rolling out of the dough.

The invention also relates to a method for processing a sheet of dough to reduce the thickness of this using the device according to any of the claims 1-19, wherein the method comprises the following steps:
a) Introducing the sheet of dough in the device to process the dough;
b) Rolling out the sheet of dough using a first roller, said first roller is transported along a first portion of the sheet of dough to stretch the first portion of the sheet of dough along a first curved structure;
c) Rolling out the sheet of dough using a second roller, said second roller is transported a second portion of the sheet of dough to stretch the second portion of the sheet of dough along a second curved structure, said second curved structure is parallel with the first structure.

The method also includes a plurality of repeating steps b) and c) for rolling out the dough.
This provides a repeating structure of the dough throughout the process.

### Figures

A detailed and non-limiting description of embodiments of the invention are described below with reference to the figures.
Figure 1 shows a principal sketch of a first embodiment of the rolling pin device, in which a plurality of rollers are arranged on a chain, viewed from above.
Figure 2 shows a detailed sketch of the embodiment from figure 1, viewed from below.
Figure 3 and 4 shows the embodiment from figure 1, viewed from opposite sides.
Figure 5 shows a section of the rolling pin device illustrated by means of two rollers.
Figure 6 shows the structure that is obtained in the dough using the invention.
Figure 7 shows a principle sketch of a second embodiment of the invention
Figure 8a-d shows a detailed sketch of the rolling pin device according to the second embodiment of the invention, viewed from different sides.

### Detailed description

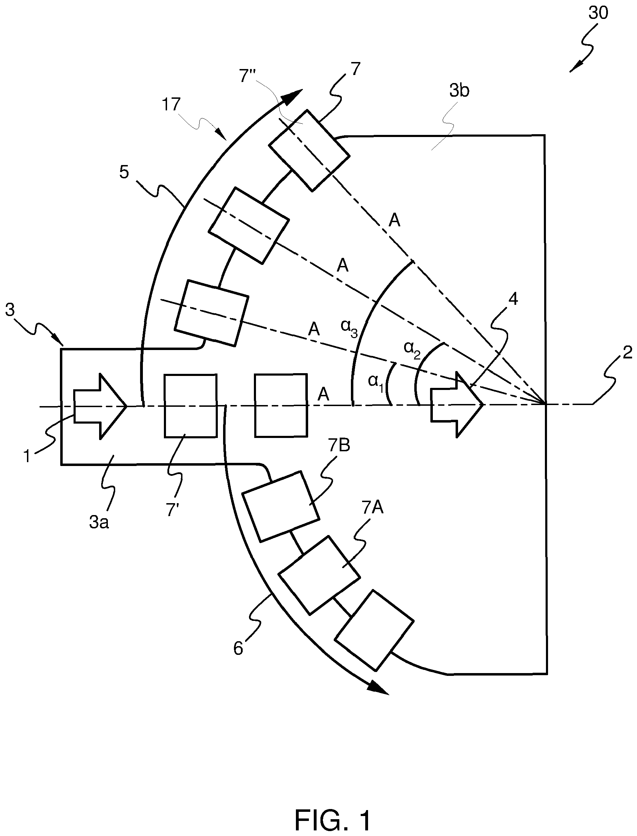

Figure 1 shows a principle sketch of a first embodiment of a rolling pin device according to the invention. The rolling pin device comprises at least one roller assembly 17 with a plurality of rollers for processing or rolling out a sheet of dough 3 in the desired direction.

The sheet of dough 3 comprises an unprocessed portion 3a that is defined as the part that is not processed by the roller assembly. This part has a large thickness and a narrow width. This portion of the sheet of dough that has been processed by the roller assembly 7 is defined as a processed part of the sheet of dough 3b. This portion 3b has a reduced thickness and increased width, because of the processing.

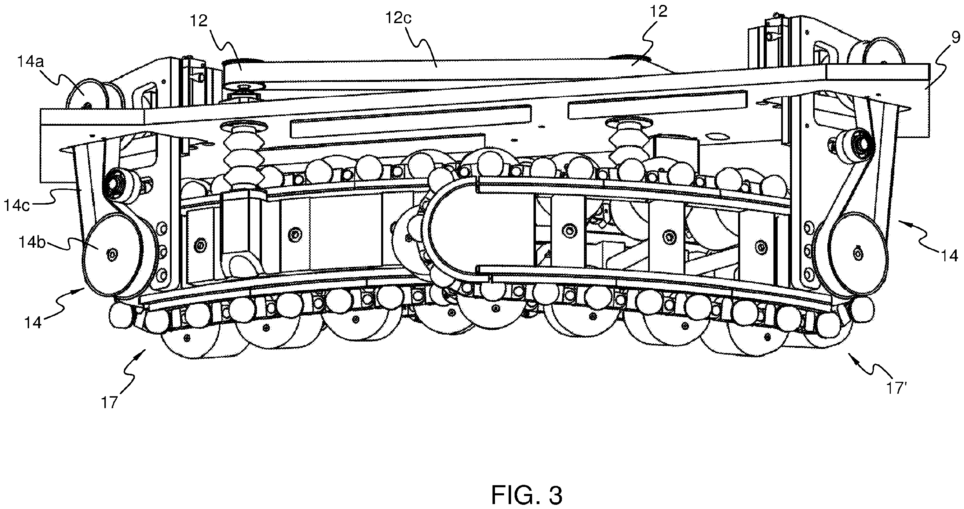

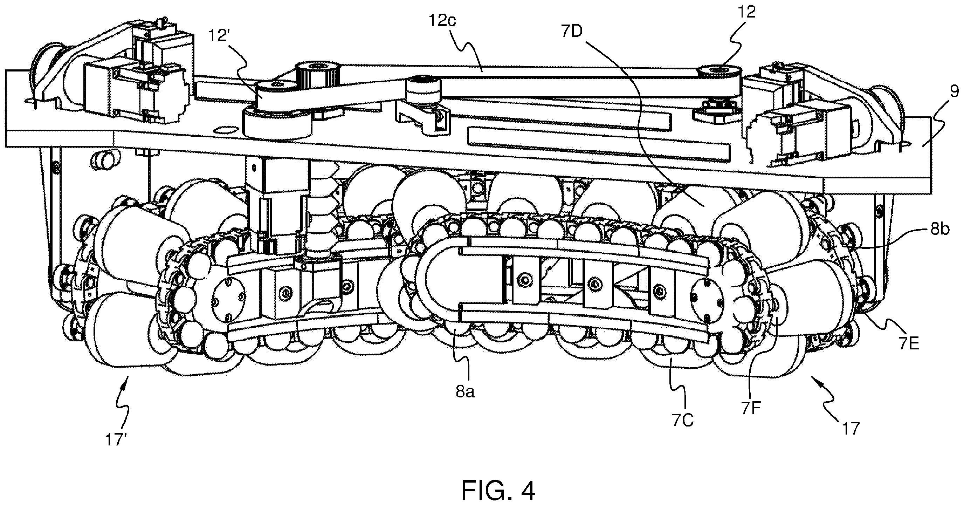

In the embodiments from the figures 1-4, it is arranged two roller assemblies 17, 17'. These are symmetrically arranged about a symmetry axis 2 as shown in figure 1. The symmetry axis 2 is also congruent with the center axis of the sheet of dough 3. The sheet of dough follows a direction of movement along this symmetry axis /center axis 2.

The symmetry axis or center axis 2 could also be defined as a center axis 2 in a plane C that is parallel with the plane B in which the sheet of dough is lying when it is transported through the rolling pin device. The center axis 2 follows the direction of the rolling pin device 30, 40 / the sheet of dough 3 when it is guided through the rolling pin device 30, 40.

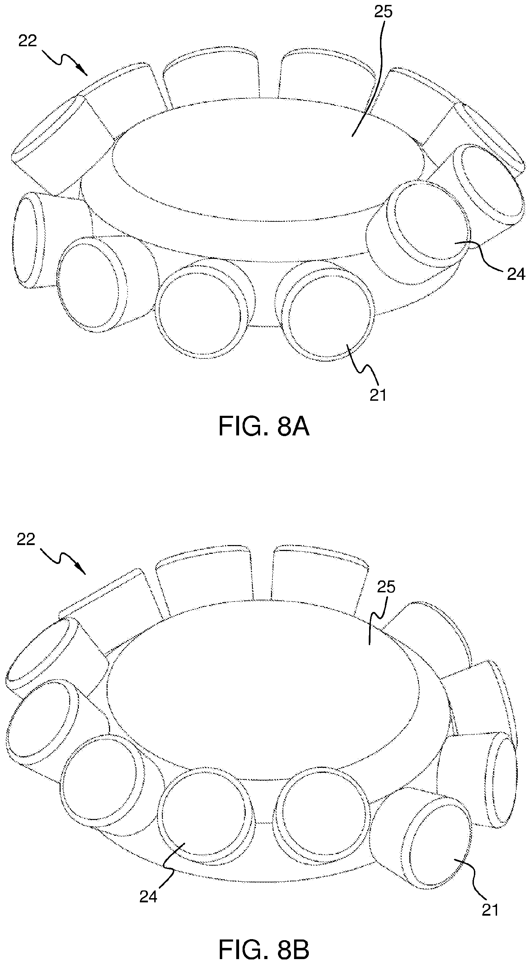

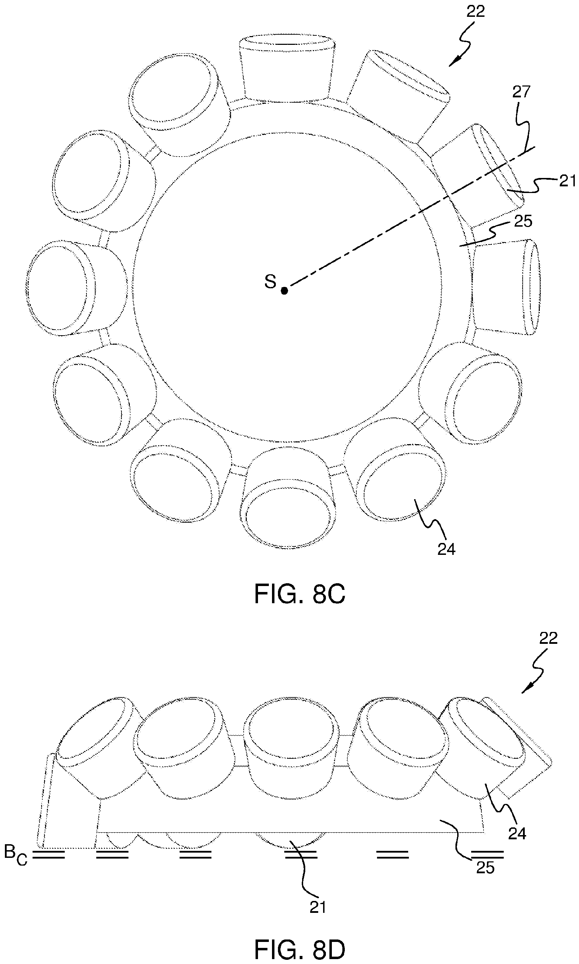

These levels are illustrated in figure 8d where the line B is defined as the plane where the sheet of dough 3 ale led through the rolling pin device, while plane C is defined as the plane that is parallel with this plane.

The roller assemblies 17, 17' further comprises a plurality of rollers 7. These follows a curved path illustrated by arrows 5, 6. The arrows 5, 6 shows that the direction of movement of the rollers in the roller assemblies 17, 17- follows a path 5, 6 outwardly from the symmetry axis 2.

The rollers 7 are adapted to get into contact with the sheet of dough at different period of times. Each of the rollers 7 meets the sheet of dough 3 in the same position.

It is defined a first position 7', 21' where each single roller 7 come into contact with the sheet of dough 3 and an end position 7", 21" where each single roller 7 is moved away from the sheet of dough 3.

In the first position 7', 21' the roller has a rolling axis A that is substantially congruent with the center axis of the sheet of dough 2. This results in that the first position of the roller 7, the roller 7 will roll substantially across the direction of the direction of movement of the sheet of dough 3.

In the end position 21" before the roller is pulled up from the sheet of dough, the roller axis A may be arranged substantially perpendicular to the direction of movement of the sheet of dough 3.

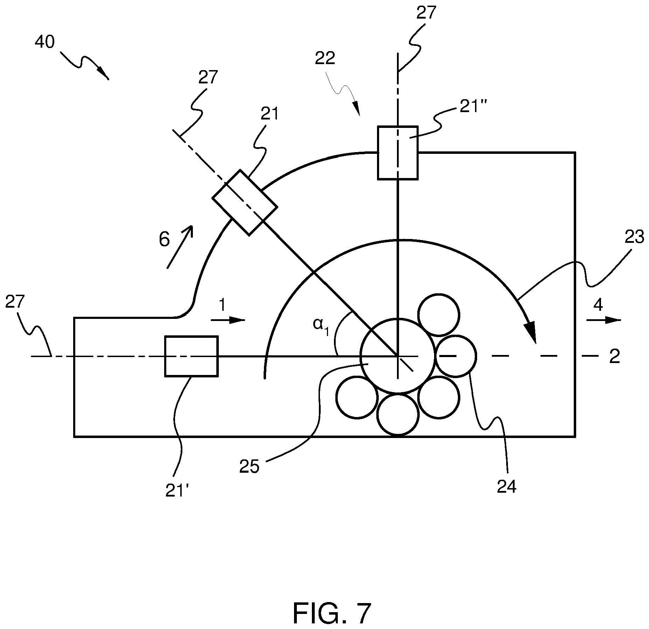

This results in that in the end position of the roller 7, the roller 7 will roll substantially in the same direction as the direction of movement of the sheet of dough 3, i.e. the roller 7 rolls parallel with the center axis of the sheet of dough. This embodiment is shown in Figure 7 as will be described further in relation to these figures.

In the positions between the first position and the end position, each roller 7, 21 has a roller axis A that has an angle α₁, α₂, α₃ relative the symmetry axis 2. (See figure 1 and 7).

This angle increases with increasing distance from the symmetry axis 2 also defined as the center axis 2 to the sheet of dough. At the last position 7", 21" of the roller 7, the roller axis has the greatest angle α₃ relative to the symmetry axis 2.

In the embodiment shown in figure 1-4, the end position 7" in which the roller is pulled from the dough is provided with a roller axis A having an angle α less than an axially vertical angle to the center axis 2 as described above. This is therefore a possible embodiment of the invention and illustrated in figure 1.

The rollers 7, 21 can be attached to a chain that is curved 5 relative to the direction of movement of the dough as shown in figure 1-4, or other embodiments may be to fasten the roller to tracks that have a curved geometry.
This could for instance be done be a roller assembly 22 where the rollers are arranged on a hub. This is shown in more detail in the embodiment of figures 7 and 8a-d and will be described in relation to these figures.

The roller pin device 30, 40 further comprises a moving device or a conveyor disposed on the underside of the at least one roller assembly 17, 17', 22 to guide the sheet of dough past the roller assembly 17, 17', 22.

The direction of movement of the motion device, and thus also the moving direction of the sheet of the dough 3 in the rolling out process is illustrated by the arrow 1 and 4. The arrow 1 shows the movement of the dough prior to the roller assembly, while the arrow 4 shows the direction of movement of the dough after the roller assembly 4. Both parts of the sheet of dough moves in the same direction along the symmetry axis 2.
The speed of the movement of the sheet of dough 3 prior to processing 1 and after processing 4 may be equal, but it could also be different dependent on which roller pin geometry and the speed desired for the actual processing.

The speed of the different dough parts 3a, 3b may be adjusted independent of each other by having a first and second belt conveyor prior to and after the rolling processing where the first conveyor has a first speed and the other conveyor has another and higher speed. The speed increase may dependent on the rolling process result in stretch in the sheet of dough 3, which constitutes further processing of the dough.

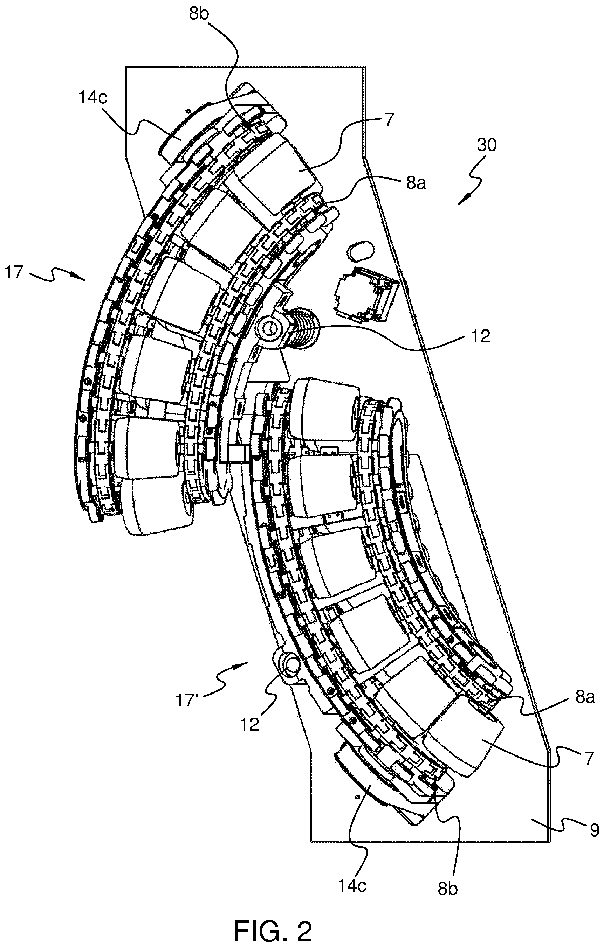

The first embodiment of the roller assembly 17, 17' according to figure 1 is shown in detail in the figures 2-4.

Figure 2 shows the roller assembly 17, 17' viewed from below. The rollers 7 are arranged between a first inner chain 8a and a second outer chain 8b. These are arranged as two continuous chains 8a, 8b that rotate in a loop. The chains are arranged so that only some of the total number of rollers 7C are in contact with the sheet of dough 3 at all time. Each of the rollers 7 that comes into contact with the sheet of dough at different times, will also leave the sheet of dough 3 at different times. The rollers 7D that are not in contact with the sheet of dough 3 follows a loop in a plane approximately parallel with the rollers 7C that are in contact with the sheet of dough 3 until they are brought down to the sheet of dough 3 or up from the sheet of dough 3.

In the figures 2-4 there are shown five rollers 7C that are adapted to be in contact with the sheet of dough 3 at the same time, and eleven rollers 7 in total. These numbers may vary and depend on the size of each of the rollers 7 and the distance between each roller 7. The length of the total roller assembly 17, 17' also affects the number of rollers 7 there are in total, and how many rollers 7C that are in contact with the sheet of dough 3.

Each of the rollers shown in the figures 2-4 are conical. By this it is meant the circumference of the rolling portion 7F that is facing the first inner chain is less than the circumference of the rolling portion 7E facing the second outer chain. This suitable since the roller assembly 17, 17' is shaped in a bow as shown in figure 2. The portion of the roller 7F that is facing the first inner chain 8 may have a shorter rotating distance than the portion of the roller 7E facing the second, outer chain 8b in the same amount of time because of the curved shape of the roller assembly. The invention is not limited to conical rollers, the rollers could also have equal diameter in both ends as an embodiment of the invention.

As described earlier, it is expedient to have two roller assemblies 17, 17' arranged symmetrically in the rolling pin device. In the embodiment in figure 2-4 the rolling pin assemblies 17, 17' arranged in a frame 9. Each of the of the roller assemblies 17, 17' is attached to the frame by means of a fastening device 12.

The fastening device is advantageously designed to adjust the processing height according to preferences and product. In a further improvement, the adjustable height fastening for the two roller assemblies 17, 17' are connected together so that they may synchronously be adjusted up and down as desired. This may for instance be done with screws connected together by a toothed belt 12c as shown in figures 2-4.

Each of the roller assemblies 17, 17' are connected only in one point so that they have the possibility to rotate around the fastening device 12.

The roller assemblies 17, 17' may in this way be adjusted to obtain different angles of the rollers at the point when they connect with the sheet of the dough 3.

The roller assemblies 17, 17' may be adjusted synchronously through the toothed belt 12c that are arranged between the fastening devices 12 to each of the roller assemblies 17, 17'. The fastening device 12 and the frame 9 is an embodiment of the invention. Other ways of arranged the roller assemblies 17, 17' are embodiments of the invention.

The roller assemblies 17, 17' as shown in figure 2-4 are also partly overlapping as the figures shows. This results in that the sheet of dough 3 is rolled out from the middle and outwardly in both directions from the symmetry axis 2.

The roller assembly 17, 17' is driven by a drive gear 14. The drive gear comprises a wheel 14a connected to a driving device (not shown) which is attached to the frame 9, and a wheel 14b arranged in connection with the roller assembly 17, 17'. A belt 14c connects the wheel 14a, 14b to each other so that the rotation is transferred from the driving device to the roller assembly 17, 17' in a well-known way.

Mechanically there are many ways to achieve that the processing follows a curved path relative to the direction of movement of the sheet of dough. There may be several possible curvatures and different curvatures depending on the actual application as described above.

The other roller assembly 17' has rollers 7 that follows a laterally reversed roller chain 8a, 8b or is otherwise arranged mirrored of the first roller assembly 17. This roller assembly follows a bent path 6 as shown in figure 1.

The processing will thus be performed equally on each side of the symmetry axis 2. It is thus avoided that the sheet of dough 3 is drawn to one of the sides causing uneven processing/rolling out of the sheet of dough 3 that would be the case if the sheet of dough 3 were processed on one side only. Even if it is advantageous with two symmetrically arranged roller assemblies 17, 17', the solution is not limited to this embodiment. An embodiment of the rolling pin device 30 may be to have only one roller assembly 17.

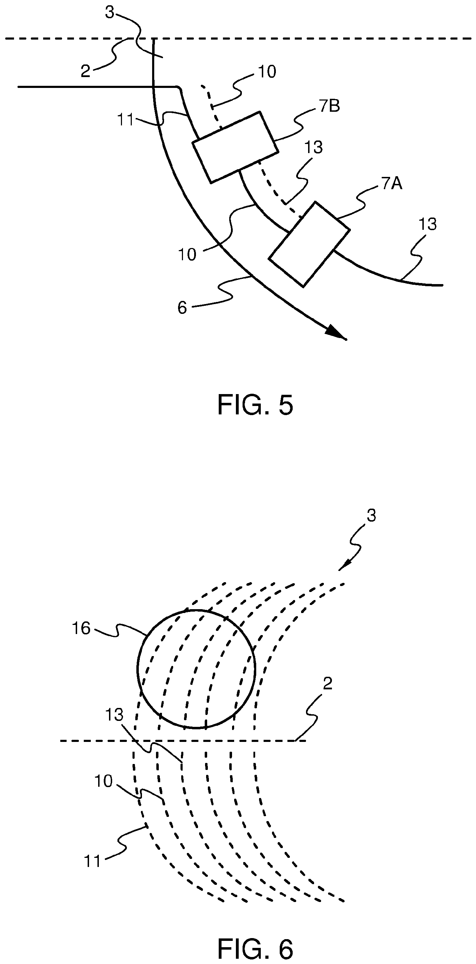

The actual processing of the sheet of dough 3 is performed in shreds where each roller is processing, reducing the thickness and increasing the width of each strip. Since each roller 7 only processes one shred, it is possible to process the dough relatively much in one single processing step without exposing the dough to large forces. The total contact area of all rollers 7 are significant and the rollers 7 will move substantial faster than the speed of the dough. Figure 5a and 6 shows this principle illustrated by two rollers 7A and 7B. Each of the rollers follows the same curvature i.e. each of the rollers follows the same curved path 6.

The roller 7A is contacting the sheet of dough first and will increase the width of the sheet of dough from the width 13 shown as dotted lines to a width 10. The roller 7B is contacting the sheet of dough after the roller 7a.

When the roller 7B is contacting the sheet of dough 3, the sheet of dough has moved in the direction of movement 4 such that a new shred will be processed. It contacts the sheet of dough at 10 and will further increase the width of the sheet of dough from width 10 as shown by dotted lines to a width 11.

Every new roller that contacts the sheet of dough will continue to increase the width of the sheet of dough.

The processed sheet of dough is illustrated in figure 6. This figure illustrates these curved structures 13, 10, 11 that together make sure that the structure in the dough is not straight, either longitudinally, transversely or at an angle relative to the direction of movement 4 of the sheet of dough 3. When a product Is cut out from the sheet of dough, for instance a round piece as shown as reference number 16, these curved structures 13, 10, 11 makes sure that no matter which angle the cut out piece 16 is rolled or folded, it will not be folded longitudinally of the structure since any fold is straight and the structure is curved.

The method is based on the fact that several small and fast moving rollers processes the dough in a manner that reduces the thickness while the structure that is formed is favorable according to a high and stable strength in the processed product independently of the direction. By processing the dough in this way, it is possible to achieve s similar flap effect as can be obtained with different multi rolling methods. Such rhythmic vibrations in the dough are practical to be able to process the geometry effectively without putting too much effort to process the dough 3. At given speed on the rollers 7, many small rollers give a vibrating effect that puts the sheet of dough in a thixotropic state where the dough is approaching a liquid consistence, and the processing takes place with reduced mechanical stresses on the dough 3. The structure 13, 10, 11 is to a great extend remained, and since the processing is performed in a curved bow 5, 6 the preserved structure 13, 10, 11 will be curved in relation to the direction of movement 1, 4 of the sheet of dough. This is useful in many applications, but particular in those cases where it is desirable to stick or cut out the product 16 from the sheet of dough to be baked.

This curved structure 13, 10, 11 will be present in the product also after the product is baked and the consumer will experience that the product is stronger and more stable.

Curved structures will contribute to better stability of the shape of the baked product 16 when it is transferred from a rolled out to a baked product.

Figure 7 and 8a-8d shows a different embodiment of the invention.

The roller pin device has in this embodiment a roller assembly comprising a ring-shaped hub 25. The roller 21, 24 is moveable coupled to the hub 25. This results in that only some of the rollers 21 are in contact with the sheet of dough. The remaining rollers are raised so that they are not in contact with the foundation.

The rollers 21, 24 may be lifted up and down in several ways. One design is that all the rollers are located on a hinge where the angle of the hinge is determined by one or more sliding tracks or roller tracks. This may also be performed by exposing them to a spring or tension or pressure that keeps the hinged rollers against a track that have the desired peripheral geometry that are placed either above or beneath the hinged rollers 21, 24.

Figure 7 shows the principle of the roller assembly according to this embodiment. The rectangles illustrate engagement rollers in a position 21 that are in contact with the sheet of dough 3 to roll out this, and the circles is illustrating resting rollers in a position 24 that are not in contact with the sheet of dough 3.

The engagement rollers 21 follows a path 26 that has the same curvature as the hub 25 in which the rollers 21, 24 are attached.

The figure 8a-8b shows the roller assembly 22 viewed obliquely from above, while figure 8c shows the roller assembly 22 viewed from above and figure 8d shows the roller assembly viewed from the side. The figures show four engagement rollers 21 that are adapted to be in contact with the sheet of dough 3 at the same time. This is only an example of an embodiment. More of less rollers may be in contact with the sheet of dough at the same time.

In principle it is most suitable to have a number of engagement rollers such that one fourth of the rollers on the hub 25 are in contact with the sheet of dough 3, from the middle of the sheet of dough 3 to the maximum rolling out position of the sheet of dough 3. As figure 7 shows the maximum rolling out is limited to a roller that starts to roll out the dough in the transverse direction until it reaches the direction of movement of the sheet of dough 3, i.e. from the first position to the end position as defined above.

After the end position where the roller axis to the roller is perpendicular to the symmetry axis 2, the roller 21 will start to roll out the dough towards the middle again. To avoid this, the roller 21 is raised from the foundation so that it no longer can roll out the sheet of dough. This becomes now a roller in the position 24.

In this engagement position, the roller axis 27 of each of the roller 21 is a line that also passes through the center S of the hub 25. The roller axis of each roller has an angle α relative the symmetry axis.

It is only disclosed a rolling pin device with a roller assembly 22 in the figures. However, in order to achieve uniform processing/rolling out of the dough 3, it could be practical to have two symmetrical roller assemblies 22 arranged mirrored. The other roller assembly must therefore be arranged laterally reversed with opposite rotational direction of the hub 25. To obtain a right geometry of the assembly, the two rollers 21, 24 must either be arranged one after the other in the direction of movement to the sheet of dough 1, 4 and/or the two rotation axis must be arranged in an angle relative each other so that they partly overlaps in the area where the rollers are not in contact with the sheet of dough 3.

The principle with rolling out of the dough by the embodiment of figure 7 and 8a-d to get curved structures 13, 10, 11 in the sheet of dough 3 is the same as shown and described in relation to figure 5 and 6 above.

The present invention has been described with reference a preferred embodiment of the invention for the sake of understanding. It should be obvious to a person skilled in the art that the present invention includes all legitimate modifications within the ambit of what has been described hereinbefore and claimed in the attached claims.

## Claims

1. A device for processing a sheet of dough (3) to reduce the thickness of the dough where the device comprises a plurality of rollers (7) arranged in series in a roller assembly (17, 17', 22) wherein each roller (7) is configured to move in a curved path (5, 6, 26) when the roller (7) is in contact with the sheet of dough (3) in order to create curved structures (10, 11, 13) within the sheet of dough (3) after processing the sheet of dough (3) in the device, wherein said each roller (7, 21) in the roller assembly (17, 17', 22) is configured to initially contact the sheet of dough substantially along a center axis (2) that extends in the longitudinal direction of the sheet of dough (3) when the sheet of dough (3) is present in the device, **characterised in that** said device comprises two roller assemblies (17, 17') arranged symetrically about the center axis (2) of the sheet of dough, and wherein said roller assemblies (17, 17') are acting oppositely of the center axis (2).

2. The device according to claim 1, wherein the sheet of dough is configured to move linearly along an axis that is parallel with the roller axis (2) to the roller (7) that initially contacts the sheet of dough (3) when the sheet of dough (3) is present in the device.

3. The device according to any of the claims 1-2, wherein each roller (7) is configured to be in contact with the sheet of dough (3) at different times when the sheet of dough (3) is present in the device.

4. The device according to any of the claim 1-3, wherein each of the roller (7) has a conical shape.

5. The device according to any of the claims 1-4, wherein the rollers (7) are arranged in series along at least one rotatable chain (8a, 8b)

6. The device according to any of the claims 1-5, wherein the rollers are arranged in series along at least one rotatable track.

7. The device according to any of the claims 1-6, wherein said roller is configured to roll in a longitudinally direction of the direction of movement to the sheet of dough (3) when the roller (7) is in contact with the sheet of dough (3) in the end position.

8. The device according to any of the claims 1-7, wherein the rollers (21, 24) are movable arranged in a hub (25).

9. The device according to claim 8, wherein the rollers (21, 24) are evenly distributed along the periphery of the hub (25).

10. A method for processing a sheet of dough (3) to reduce the thickness of the dough using the device according to any of the claims 1-9, wherein the method comprises the following steps:
a) Introducing the sheet of dough (3) in the device to process the dough;
b) Rolling out the sheet of dough (3) using a first roller (7a), said first roller (7a) is transported along a first portion of the sheet of dough to stretch the first portion of the sheet of dough along a first curved structure (10),
c) Rolling out the sheet of dough (3) using a second roller (7b), said second roller is transported a second portion of the sheet of dough to stretch the second portion of the sheet of dough along a second curved structure (11), said second curved structure is parallel with the first structure.

11. Method according to claim 10 wherein the method comprises a plurality of repeating steps b) and C) of rolling out the dough.

## Patentansprüche

1. Vorrichtung zum Verarbeiten einer Teigplatte (3), um die Dicke des Teigs zu reduzieren, wobei die Vorrichtung eine Vielzahl von Walzen (7) umfasst, die in einer Walzenanordnung (17, 17', 22) in Reihe angeordnet sind, wobei jede Walze (7) so konfiguriert ist, dass sie sich auf einem gekrümmten Weg (5, 6, 26) bewegt, wenn die Walze (7) mit der Teigplatte (3) in Kontakt ist, um nach der Verarbeitung der Teigplatte (3) in der Vorrichtung gekrümmte Strukturen (10, 11, 13) innerhalb der Teigplatte (3) zu erzeugen,
wobei jede Walze (7, 21) in der Walzenanordnung (17, 17', 22) so konfiguriert ist, dass sie anfänglich die Teigplatte im Wesentlichen entlang einer Mittelachse (2) berührt, die sich in der Längsrichtung der Teigplatte (3) erstreckt, wenn sich die Teigplatte (3) in der Vorrichtung befindet,
**dadurch gekennzeichnet, dass**
die Vorrichtung zwei Walzenanordnungen (17, 17') umfasst, die symmetrisch um die Mittelachse (2) der Teigplatte angeordnet sind, und
wobei die Walzenanordnungen (17, 17') bezüglich der Mittelachse (2) entgegengesetzt zueinander wirken.

2. Vorrichtung nach Anspruch 1, wobei die Teigplatte so konfiguriert ist, dass sie sich linear entlang einer Achse, die parallel zur Walzenachse (2) ist, zu der Walze (7) bewegt, die die Teigplatte (3) anfänglich berührt, wenn die Teigplatte (3) sich in der Vorrichtung befindet.

3. Vorrichtung nach einem der Ansprüche 1 bis 2, wobei jede Walze (7) so konfiguriert ist, dass sie zu unterschiedlichen Zeitpunkten mit der Teigplatte (3) in Kontakt ist, wenn sich die Teigplatte (3) in der Vorrichtung befindet.

4. Vorrichtung nach einem der Ansprüche 1 bis 3, wobei jede der Rollen (7) eine konische Form aufweist.

5. Vorrichtung nach einem der Ansprüche 1 bis 4, wobei die Rollen (7) in Reihe entlang mindestens einer drehbaren Kette (8a, 8b) angeordnet sind

6. Vorrichtung nach einem der Ansprüche 1 bis 5, wobei die Rollen in Reihe entlang mindestens einer drehbaren Bahn angeordnet sind.

7. Vorrichtung nach einem der Ansprüche 1 bis 6, wobei die Walze so konfiguriert ist, dass sie in einer Längsrichtung der Bewegungsrichtung zur Teigplatte (3) rollt, wenn die Walze (7) in der Endposition mit der Teigplatte (3) in Kontakt ist.

8. Vorrichtung nach einem der Ansprüche 1 bis 7, wobei die Rollen (21, 24) beweglich in einer Nabe (25) angeordnet sind.

9. Vorrichtung nach Anspruch 8, wobei die Rollen (21, 24) gleichmäßig entlang des Umfangs der Nabe (25) verteilt sind.

10. Verfahren zum Verarbeiten einer Teigplatte (3) zum Reduzieren der Dicke des Teiges unter Verwendung der Vorrichtung nach einem der Ansprüche 1 bis 9, wobei das Verfahren die folgenden Schritte umfasst:
a) Einführen der Teigplatte (3) in das Gerät zur Teigverarbeitung;
b) Ausrollen der Teigplatte (3) unter Verwendung einer ersten Walze (7a), wobei die erste Walze (7a) entlang eines ersten Abschnitts der Teigplatte transportiert wird, um den ersten Abschnitt der Teigplatte entlang einer ersten gekrümmten Struktur (10) zu strecken,
c) Ausrollen der Teigplatte (3) unter Verwendung einer zweiten Walze (7b), wobei die zweite Walze einen zweiten Abschnitt der Teigplatte transportiert, um den zweiten Abschnitt der Teigplatte entlang einer zweiten gekrümmten Struktur (11) zu strecken, wobei die zweite gekrümmte Struktur parallel zu der ersten Struktur ist.

11. Verfahren nach Anspruch 10, wobei das Verfahren eine Vielzahl von sich wiederholenden Schritten b) und c) des Ausrollens des Teigs umfasst.

## Revendications

1. Dispositif de traitement d'une feuille de pâte (3) pour réduire l'épaisseur de la pâte, où le dispositif comprend une pluralité de rouleaux (7) agencés en série en un ensemble de rouleaux (17, 17', 22) dans lequel
chaque rouleau (7) est configuré pour se déplacer selon une trajectoire incurvée (5, 6, 26) lorsque le rouleau (7) est en contact avec la feuille de pâte (3) afin de créer des structures incurvées (10, 11, 13) à l'intérieur de la feuille de pâte (3) après un traitement de la feuille de pâte (3) dans le dispositif, dans lequel
ledit chaque rouleau (7, 21) dans l'ensemble de rouleaux (17, 17', 22) est configuré pour venir en contact initialement avec la feuille de pâte sensiblement le long d'un axe central (2) qui s'étend dans la direction longitudinale de la feuille de pâte (3) lorsque la feuille de la pâte (3) est présente dans le dispositif, **caractérisé en ce que** ledit dispositif comprend deux ensembles de rouleaux (17, 17') agencés de manière symétrique autour de l'axe central (2) de la feuille de pâte, et dans lequel lesdits ensembles de rouleaux (17, 17') agissent à l'opposé de l'axe central (2).

2. Dispositif selon la revendication 1, dans lequel la feuille de pâte est configurée pour se déplacer linéairement le long d'un axe qui est parallèle à l'axe du rouleau (2) jusqu'au rouleau (7) qui vient initialement en contact avec la feuille de pâte (3) lorsque la feuille de pâte (3) est présente dans le dispositif.

3. Dispositif selon l'une quelconque des revendications 1 à 2, dans lequel chaque rouleau (7) est configuré pour être en contact avec la feuille de pâte (3) à des instants différents lorsque la feuille de pâte (3) est présente dans le dispositif.

4. Dispositif selon l'une quelconque des revendications 1 à 3, dans lequel chacun des rouleaux (7) a une forme conique.

5. Dispositif selon l'une quelconque des revendications 1 à 4, dans lequel les rouleaux (7) sont agencés en série le long d'au moins une chaîne rotative (8a, 8b).

6. Dispositif selon l'une quelconque des revendications 1 à 5, dans lequel les rouleaux sont agencés en série le long d'au moins une piste rotative.

7. Dispositif selon l'une quelconque des revendications 1 à 6, dans lequel ledit rouleau est configuré pour rouler dans une direction longitudinale de la direction de déplacement par rapport à la feuille de pâte (3) lorsque le rouleau (7) est en contact avec la feuille de pâte (3) dans la position finale.

8. Dispositif selon l'une quelconque des revendications 1 à 7, dans lequel les rouleaux (21, 24) sont agencés de manière mobile dans un moyeu (25).

9. Dispositif selon la revendication 8, dans lequel les rouleaux (21, 24) sont répartis de manière régulière le long de la périphérie du moyeu (25).

10. Procédé de traitement d'une feuille de pâte (3) pour réduire l'épaisseur de la pâte en utilisant le dispositif selon l'une quelconque des revendications 1 à 9, dans lequel le procédé comprend les étapes suivantes consistant à :
a) introduire la feuille de pâte (3) dans le dispositif pour traiter la pâte ;
b) rouler la feuille de pâte (3) à l'aide d'un premier rouleau (7a), ledit premier rouleau (7a) étant transporté le long d'une première partie de la feuille de pâte pour étirer la première partie de la feuille de pâte le long d'une première structure incurvée (10),
c) rouler la feuille de pâte (3) à l'aide d'un second rouleau (7b), ledit second rouleau étant transporté le long d'une seconde partie de la feuille de pâte pour étirer la seconde partie de la feuille de pâte le long d'une seconde structure incurvée (11), ladite seconde structure incurvée étant parallèle à la première structure.

11. Procédé selon la revendication 10,
dans lequel le procédé comprend une pluralité de répétition des étapes b) et C) de roulage de la pâte.
